# EUROPÄISCHE PATENTSCHRIFT

(11) **EP 0 715 370 B1**
(45) Veröffentlichungstag und Bekanntmachung des Hinweises auf die Patenterteilung: **28.04.1999**
(21) Anmeldenummer: 95118324.3
(22) Anmeldetag: 22.11.1995
(51) Int. Cl.: H01R 4/46

(54) **Anschlussklemme**
Connecting terminal
Borne de connexion

(30) Priorität: 28.11.1994 DE 4442280
(43) Veröffentlichungstag der Anmeldung: 05.06.1996
(73) Patentinhaber: ABB PATENT GmbH, 68309 Mannheim (DE)
(72) Erfinder: Oehmig, Wilhelm, D-67071 Ludwigshafen (DE); Bily, Libor, A-6713 Ludesch (AT)
(74) Vertreter: Rupprecht, Klaus, Dipl.-Ing.

(56) Entgegenhaltungen:
- EP-A- 0 029 314
- EP-A- 0 528 255
- DE-A- 3 640 959
- DE-B- 1 805 315
- US-A- 5 122 068

## Beschreibung

Die Erfindung betrifft eine Anschlußklemme für wenigstens ein Kabel gemäß dem Oberbegriff des Anspruches 1.

Eine derartige Anschlußklemme ist aus der DE-OS 36 40 959 bekannt. Bei dieser Anordnung sind in den Klemmkörper oder Deckel Muttern unverlierbar eingesetzt und die Befestigung der Klemmkörper sowie der Anschlußlasche erfolgt lediglich von der Seite des Zentralkörpers, auf der die Lasche angeschlossen ist.

Eine Klemme der eingangs genannten Art ist aus der US-A 5 122 068 bekannt geworden. Diese Klemme besitzt einen Zentralkörper mit mehreren Rillen, die sich durch entsprechende Rillen in einem Klemmkörper jeweils zu Kabelaufnahmeräumen ergänzen. Der Klemmkörper wird mittels beidseitig zu allen Rillen befindlichen Schraubenpaaren 132 auf dem Zentralkörper fixiert, wobei der Klemmenkörper Durchgangslöcher und der Zentralkörper Gewindelöcher für die Schraubenpaare aufweisen. Der Zentralkörper wird zusammen mit dem Klemmenkörper mittels weiterer Schraubenpaare auf einen Basisabschnitt oder auf eine Lasche aufgesetzt, wobei der Zentralkörper Durchgangsöffnungen und der Zentralkörper bzw. die Laschen Gewindebohrungen aufweisen, so daß auch die zweiten Schraubenpaare zur Fixierung des Zentralkörpers von der Klemmkörperseite aus an der Basisplatte oder Lasche befestigt werden können.

Aufgabe der Erfindung ist es, eine vereinfachte Fixierung und Befestigung des Klemmkörpers und der Lasche vorzunehmen.

Diese Aufgabe wird erfindungsgemäß gelöst durch die kennzeichnenden Merkmale des Anspruches 1.

Danach befinden sich die Schraubenpaare, mit denen die Klemmkörper am Zentralkörper befestigt werden können, zwischen den Schraubenpaaren, mit denen die Lasche am Zentralkörper befestigbar ist; die Schrauben der Schraubenpaare für den Klemmkörper werden dann auf der Klemmkörperseite eingeschraubt und die für die Lasche auf der Laschenseite.

Die Gewindeabschnitte, in die die Schrauben der Schraubenpaare eingeschraubt werden können, sind durch Muttern gebildet, die im Zentralkörper unverlierbar eingesetzt bzw. eingebracht sind.

Weitere Ausgestaltungen und Verbesserungen der Erfindung sind den Unteransprüchen zu entnehmen.

Anhand der Zeichnung, in der zwei Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Fig. 1 bis 3: drei unterschiedliche Ansichten einer Anschlußklemme gemäß einer ersten Ausführungsform, wobei die Fig. 3 und 6 jeweils unterschiedliche Schnittebenen zeigen, und
- Fig. 4 bis 6: drei Ansichten einer zweiten Ausführungsform einer Anschlußklemme.

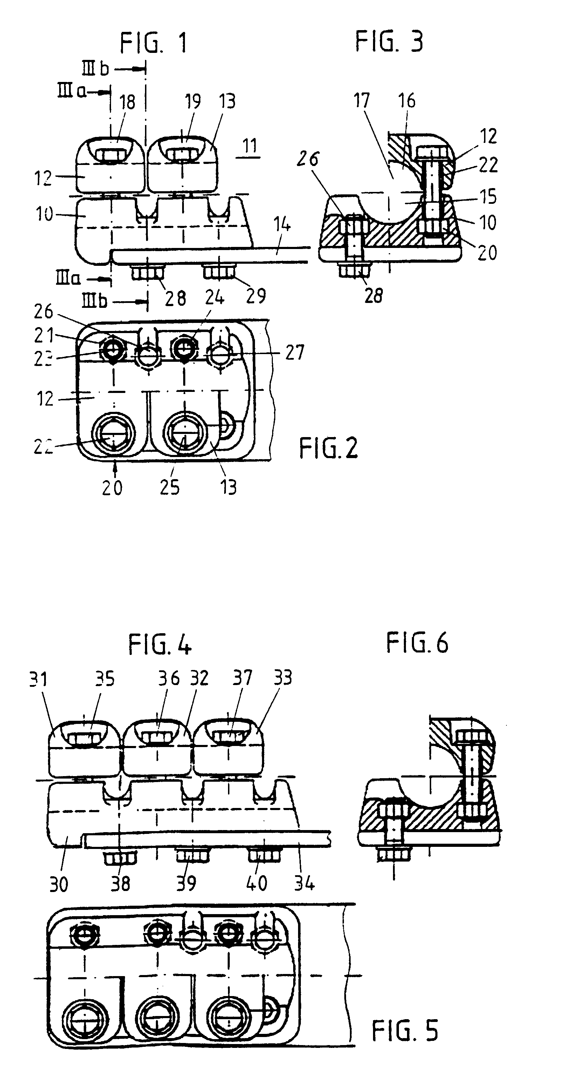

Die Anschlußklemme 11 der Fig. 1 bis 3 besitzt einen Zentralkörper 10, auf dessen in der Zeichnung oberen Seite zwei Klemmkörper 12, 13 und auf dessen gegenüberliegenden Seite eine Anschlußlasche 14 befestigt ist. Wie aus Fig. 3 ersichtlich ist, die rechts der Mittellinie eine Schnittansicht gemäß Schnittlinie IIIa-IIIa und links der Mittellinie eine Schnittansicht gemäß Schnittlinie IIIb-IIIb der Fig. 1 zeigt, befindet sich auf der Oberseite des Zentralkörpers 10 eine halbkreisförmige Ausnehmung 15, der eine entsprechende Ausnehmung 16 am Klemmkörper 12 bzw. 13 entspricht; die beiden Ausnehmungen 15 und 16 bilden im montierten Zustand miteinander einen Kabelklemmraum 17. In gleicher Weise besitzt auch der Klemmkörper 13 eine entsprechende Ausnehmung, so daß auch zwischen diesem und dem Zentralkörper 10 ein Kabelklemmraum angeordnet ist, der mit dem zwischen dem Klemmkörper 12 und dem Zentralkörper 10 gebildeten Kabelklemmraum 17 fluchtet.

Die Klemmkörper 12 und 13 werden mittels je eines ersten Schraubenpaares 18 bzw. 19 am Zentralkörper 10 befestigt. Zu diesem Zweck befinden sich im Zentralkörper den jeweiligen ersten Schraubenpaaren zugehörige, in den Zentralkörper 10 eingesetzte oder eingestemmte Muttern 20, von denen in Fig. 3 aufgrund des Schnittes lediglich eine Mutter 20 zu sehen ist. Die andere Mutter, die in Fig. 2 strichliert dargestellt ist, ist mit der Bezugsziffer 21 bezeichnet. In gleicher Weise befinden sich im Zentralkörper 10 dem Klemmkörper 13 zugehörige Muttern.

In die Muttern 20 bzw. 21 werden Schrauben 22 und 23 eingeschraubt, um auf diese Weise den Klemmkörper 12 an dem Zentralkörper 10 zu befestigen. Mit den Schrauben 24 und 25 wird der Klemmkörper 13 am Zentralkörper befestigt.

Die beiden Schrauben 22 und 23 bzw. 24 und 25 bilden jeweils ein erstes Schraubenpaar, deren Ebene jeweils senkrecht zur Längsachse des Kabelklemmraums 17 verläuft.

Zwischen den Muttern 20 und 21 und den den Schrauben 24 und 25 zugehörigen Muttern sind Muttern 26 in den Zentralkörper eingebracht, die paarweise einander zugeordnet sind und jeweils zwischen den Ebenen der Schrauben 22 und 23 bzw. 24 und 25 liegen; bei der Ausgestaltung nach den Fig. 1 bis 3 liegen die beiden Mutternpaare 26 zwischen den genannten Ebenen und ein zweites Mutternpaar 27 außerhalb dieser Ebene. In diese Muttern sind von der gegenüberliegenden Seite des Zentralkörpers einschraubbare Schrauben 28 und 29 angesetzt, die jeweils ein zweites Schraubenpaar bilden. Man erkennt aus der Fig. 1, daß die ersten Schraubenpaare 18 und 19 gegenüber dem zweiten Schraubenpaar 28 und 29 versetzt sind.

Die Fig. 4 bis 6 zeigen eine andere Ausgestaltung der Erfindung. An einem Zentralkörper 30 sind auf dessen einen Seite drei Klemmkörper 31, 32 und 33 angeschraubt und auf dessen anderer Seite eine Anschlußlasche 34. Anstatt lediglich zweier Klemmkörper 12 und 13 sind hier drei Klemmkörper vorgesehen, so daß dadurch drei Schraubenpaare 35, 36 und 37 vorhanden sind. Die Anschlußlasche 34 ist ebenfalls mit drei Schraubenpaaren 38, 39 und 40 am Zentralkörper 30 befestigt. Im übrigen in die Anordnung gemäß Fig. 4 bis 6 die gleiche wie die gemäß Fig. 1 bis 3.

Die Anschlußlasche 24 kann bei der Klemme gemäß den Fig. 1 bis 3 so angeordnet sein wie gezeichnet; sie kann auch senkrecht zum Verlauf des Kabelklemmraumes ausgerichtet sein. Es besteht auch die Möglichkeit, den Zentralkörper 10 bzw. 30 doppelt so breit auszugestalten, so daß auch zwei Reihen von Klemmkörpern 31 bis 33 darauf zu befestigen sind. Die Anschlußlasche 34 würde dann ebenfalls doppelt so breit ausgebildet sein.

## Patentansprüche

1. Anschlußklemme für wenigstens ein Kabel mit einem Zentralkörper (10, 30) mit wenigstens einem Klemmkörper (12,13; 31,32,33), der mittels eines ersten Schraubenpaares (18,19,22,23,24,25; 35,36,37) am Zentralkörper auf dessen einer Seite festschraubbar ist, wobei die Schrauben jedes ersten Schraubenpaares beidseitig zu einem zwischen dem Zentralkörper (10,30) und dem Klemmkörper befindlichen bzw. vorhandenen Kabelklemmraum (17) angeordnet sind, und mit einer Anschlußlasche (14; 34), die mittels wenigstens zwei zweiten Schraubenpaaren (28,29; 38,39,40) auf der anderen Seite des Zentralkörpers befestigbar ist, wobei die Schrauben jedes zweiten Schraubenpaares ebenfalls beidseitig zu dem Kabelklemmraum liegen, dadurch gekennzeichnet, daß jeweils ein erstes Schraubenpaar (18,19; 35, 36, 37) zwischen oder neben jeweils zwei in Richtung des Kabelklemmraumes (17) nebeneinander befindlichen zweiten Schraubenpaaren (18, 19; 35, 36, 37) von der Klemmkörperseite und die zweiten Schraubenpaare (28, 29; 38, 39, 40) von der Laschenseite aus festschraubbar sind.

2. Anschlußklemme nach Anspruch 1, dadurch gekennzeichnet, daß die Gewindeabschnitte im Zentralkörper, in der die Schrauben der ersten und zweiten Schraubenpaare einschraubbar sind, durch in dem Zentralkörper (10; 30) eingeformte Muttern (20; 26) gebildet sind.

3. Anschlußklemme nach Anspruch 2, dadurch gekennzeichnet, daß die Muttern (20; 26) im Zentralkörper (10;30) eingestemmt sind.

## Claims

1. Connecting terminal for at least one cable, having a central body (10, 30), having at least one clamping body (12, 13; 31, 32, 33), which can be screw-fastened on one side of the central body by means of a first pair of screws (18, 19, 22, 23, 24, 25; 35, 36, 37), the screws of each first pair of screws being arranged on both sides of a cable-clamping space (17) which is situated or is present between the central body (10; 30) and the clamping body, and having a connecting link (14; 34) which can be fastened on the other side of the central body by means of at least two second pairs of screws (28, 29; 38, 39, 40), the screws of each second pair of screws likewise being situated on both sides of the cable-clamping space, characterized in that a respective first pair of screws (18, 19; 35, 36, 37) can be screw-fastened from the clamping-body side between, or next to, two respective second pairs of screws (18, 19; 35, 36, 37) situated next to one another in the direction of the cable-clamping space (17), and the second pairs of screws (28, 29; 38, 39, 40) can be screw-fastened from the link side.

2. Connecting terminal according to Claim 1, characterized in that the threaded sections in the central body, into which the screws of the first and second pairs of screws can be screwed, are formed by nuts (20; 26) moulded into the central body (10; 30).

3. Connecting terminal according to Claim 2, characterized in that the nuts (20; 26) are set into the central body (10; 30).

## Revendications

1. Borne de connexion pour au moins un câble, comprenant corps central (10, 30), au moins un élément de serrage (12, 13; 31, 32, qui peut être fixé au corps central, sur l'un des côtés de celui-ci, à d'un premier couple de vis (18, 19; 22, 23, 24, 25; 35, 36, 37), les vis chaque premier couple de vis étant disposées de part et d'autre d'un de serrage de câble (17) qui se trouve ou existe entre le corps central 30) et le corps de serrage, et une patte de connexion (14, 34) qui peut fixée à l'aide d'au moins deux deuxièmes couples de vis (28, 29; 38, à l'autre côté du corps central, les vis de chaque deuxième couple de étant situées également de part et d'autre de l'espace de serrage de caractérisée par le fait qu'à chaque fois un premier couple de vis (18, 35, 36, 37), entre ou à côté de deux deuxièmes couples de vis (18, 19; 36, 37) disposés côte à côte dans la direction de l'espace de serrage de câble (17) peut être serré depuis le côté élément de serrage et les mes couples de vis (28, 29; 38, 39, 40) peuvent être serrés depuis le patte.

2. Borne de connexion selon la revendication 1, caractérisée le fait que les parties filetées dans le corps central, dans lesquelles les des premier et deuxièmes couples de vis peuvent être vissées sont tuées d'écrous (20; 26) façonnés dans le corps central.

3. Borne de connexion selon la revendication 2, caractérisée le fait que les écrous (20; 26) sont encastrés dans le corps central (10; 30).
